# EUROPEAN PATENT APPLICATION

(11) **EP 2 412 559 A2**
(43) Date of publication of application: **01.02.2012**
(21) Application number: 11174996.6
(22) Date of filing: 22.07.2011
(51) Int. Cl.: B60L 7/18, B60L 11/18

(54) **Driving support device, driving support method, and driving support program**

(30) Priority: 30.07.2010 JP 2010172412
(71) Applicant: AISIN AW CO., LTD., Anjo-shi, Aichi 444-1192 (JP)
(72) Inventor: Niwa, Toshiaki, Anjo-shi, Aichi 444-1192 (JP)
(74) Representative: Kramer - Barske - Schmidtchen

(57) **Abstract**

A driving support device (50) comprises a regenerative electric power specification unit (51a) adapted to specify electric power regenerated by a regenerative brake, a guidance unit (51b) adapted to perform guidance to encourage deceleration of a vehicle at a timing based on a distance from the vehicle to a target feature, and a setting unit (51c) adapted to set a timing at which the guidance unit performs the guidance based on the electric power regenerated by the regenerative brake in response to a brake operation performed after the guidance unit performs the guidance and before the vehicle passes the target feature as specified by the regenerative electric power specification unit. The guidance unit is adapted to perform the guidance anew at the timing set by the setting unit.

## Description

### INCORPORATION BY REFERENCE

The disclosure of Japanese Patent Application No. 2010-172412 filed on July 30, 2010 including the specification, drawings and abstract is incorporated herein by reference in its entirety.

### BACKGROUND OF THE INVENTION

The present invention relates to a driving support device, a driving support method, and a driving support program.

### Description of the Related Art

According to related art, a vehicle that includes a motor generator uses the motor generator as a power source during travel, and uses the motor generator as a regenerative brake during vehicle deceleration so as to regenerate electric power, which is stored in a battery.

Increasing the amount of electric power regenerated by the regenerative brake can contribute to increasing the energy efficiency of the vehicle. Therefore, in terms of energy efficiency, the regenerative brake should be used as much as possible during vehicle deceleration. However, the braking power of the regenerative brake has an upper limit, and a friction brake is also used for braking when a sudden brake operation by the driver or the like requires braking power that exceeds the upper limit of the regenerative brake. In such cases, part of the kinetic energy of the vehicle is converted into thermal energy by the friction brake, which reduces the amount of electric power that can be regenerated by the regenerative brake compared to deceleration using only the regenerative brake.

In view of this, a vehicle driving support device has been proposed that provides the driver with suitable brake operation guidance. This vehicle driving support device extracts map information for a deceleration-requiring point located in the advancing direction of the vehicle based on the current position of the vehicle. Using the extracted map information for the deceleration-requiring point, the vehicle driving support device sets a target vehicle speed at the deceleration-requiring point, and calculates a required deceleration distance for decelerating by a regenerative brake from a current vehicle speed to the target vehicle speed. Once the vehicle reaches a brake start point located before the deceleration-requiring point at the deceleration distance, the brake operation guidance is started (see Japanese Patent Application Publication No. JP-A-2007-221889, for example).

### SUMMARY OF THE INVENTION

However, the device according to the related art as described above does not consider the fact that every driver has a unique driving style, and that there can be variations in the driving style of the same driver. Therefore, this device provides brake operation guidance based on the same brake start point for all drivers. As a consequence, depending on the driver, the timing at which the brake operation guidance is provided may feel delayed. This results in the driver performing a more sudden brake operation than necessary, which may require a braking force that exceeds the upper limit of the regenerative brake and reduce the amount of electric power regenerated by the regenerative brake.

The present invention was devised in view of the foregoing circumstances, and provides a driving support device, a driving support method, and a driving support program, which can take into account a driver's driving style and perform guidance such that electric power is efficiently regenerated by a regenerative brake.

According to a driving support device described in a first aspect of the present invention, a driving support method described in a seventh aspect of the present invention, and a driving support program described in an eighth aspect of the present invention, based on electric power regenerated by a regenerative brake in response to a brake operation performed after a guidance unit performs guidance and before a target feature is passed, a timing at which to perform guidance is set, and guidance is performed anew at the set timing. Therefore, guidance can be performed such that electric power regeneration is efficiently performed by the regenerative brake in consideration of a driving style of a driver.

According to a second aspect of the present invention, the timing at which to perform guidance may be set based on a brake operation performed after the guidance unit performs guidance and before the target feature is passed. Therefore, guidance can be performed such that a suitable brake operation is performed in consideration of the driving style of the driver.

According to a third aspect of the present invention, a setting unit may set a timing at which to perform guidance for each of the target feature types specified by a type specification unit. The guidance unit may perform guidance at a timing that corresponds to the target feature type specified by the type specification unit among a plurality of timings set by the setting unit. Therefore, guidance can be performed such that electric power regeneration is efficiently performed by the regenerative brake at a suitable timing in accordance with the target feature type and in consideration of the driving style of the driver.

According to a fourth aspect of the present invention, the setting unit may set a timing at which the guidance unit performs the guidance earlier if the electric power regenerated by the regenerative brake in response to the brake operation reaches a regenerative upper-limit electric power. Therefore, guidance can be performed at a timing that allows the driver to perform a gentle brake operation without the regenerative electric power reaching the regenerative upper-limit electric power. Thus, guidance can be performed such that the regenerative brake efficiently regenerates electric power.

According to a fifth aspect of the present invention, the setting unit may set a timing at which the guidance unit performs the guidance later if a brake operation is performed following an acceleration operation after the guidance unit performs the guidance and before the target feature is passed. Therefore, guidance can be performed at a timing at which a vehicle approaches the target feature without requiring that the driver accelerate the vehicle after guidance is performed by the guidance unit. Thus, unnecessary acceleration operations and brake operations can be suppressed.

According to a sixth aspect of the present invention, the guidance unit may perform guidance at a median value among the plurality of timings that corresponds to timing information stored in a timing information storage unit. Therefore, guidance can be performed at the optimal timing in consideration of the driving style of the driver.

### BRIEF DESCRIPTION OF THE DRAWINGS

FIG 1 is a schematic diagram that illustrates circumstances in which a driving support device according to a first embodiment is used;
FIG 2 is a block diagram that illustrates a driving support system according to the first embodiment;
FIG 3 is a table that illustrates information stored in a timing database; FIG 4 is a flowchart of a driving support process;
FIG 5 is a flowchart continuing from FIG 4 of the driving support process;
FIG 6 is a graph that illustrates a relationship between braking power and an elapsed time after a guidance unit starts guidance output;
FIG 7 is a flowchart of a setting process; and
FIG 8 is a table that illustrates information stored in the timing database according to a second embodiment.

### DETAILED DESCRIPTION OF THE EMBODIMENTS

Hereinafter, embodiments of a driving support device, a driving support method, and a driving support program according to the present invention will be described in detail with reference to the drawings. However, the scope of the present invention is not limited to such embodiments. Further note that, in the description below, the driving support device is installed in a vehicle that includes a motor generator and a battery, and uses the motor generator as a regenerative brake.

### First Embodiment

First, a driving support device according to a first embodiment will be described. In the first embodiment, a timing at which to perform guidance is set based on a brake operation performed after a guidance unit performs guidance and before a target feature is passed, and electric power regenerated by a regenerative brake in response to the brake operation.

### Constitution

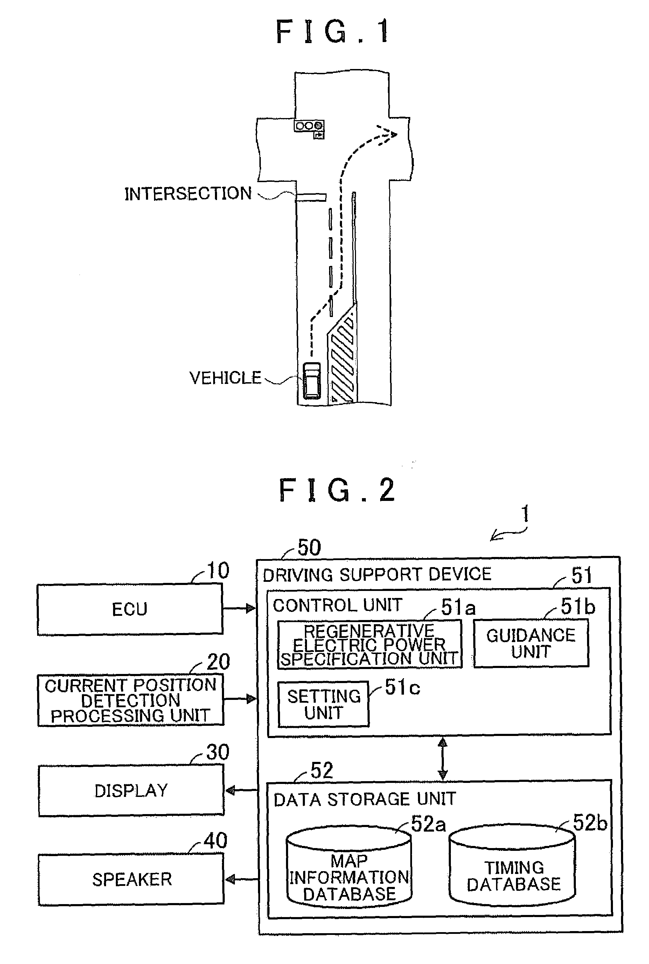

First, the constitution of the driving support device according to the first embodiment will be described. FIG 1 is a schematic diagram that illustrates circumstances in which the driving support device according to the first embodiment is used. As shown in FIG 1, when stopping the vehicle at an intersection, for example, the driving support device performs guidance that encourages a brake operation at a suitable timing in consideration of the driver's driving style, which allows electric power to be efficiently regenerated by the regenerative brake in accordance with the brake operation of the driver. In the description below, features for which the vehicle should be stopped such as intersections, stop lines, and railroad crossings, and features for which the vehicle should be decelerated such as curves, ETC toll booths, and expressway exits will be referred to as "target features".

FIG 2 is a block diagram that illustrates a driving support system according to the first embodiment. As shown in FIG 2, a driving support system 1 is installed in a vehicle, and includes an electronic control unit (ECU) 10, a current position detection processing unit 20, a display 30, a speaker 40, and a driving support device 50.

### Constitution: ECU

The ECU 10 controls an engine, a motor generator, a battery, and the like of a vehicle (all not shown in the drawings) based on the output of various types of sensors such as a vehicle speed sensor, an accelerator sensor, a brake sensor, and a shift position sensor (all not shown in the drawings). The ECU 10 inputs to the driving support device 50 various types of information such as a vehicle speed, an accelerator operation amount, a brake depression force, and a battery voltage, current, and chargeable electric power.

### Constitution: Current Position Detection Processing Unit

The current position detection processing unit 20 is a current position detection unit that detects the current position of the vehicle in which the drive support system 1 is installed. Specifically, the current position detection processing unit 20 has at least one of a GPS, a geomagnetic sensor, a distance sensor, and a gyroscopic sensor (all not shown in the drawings), and detects the current position (coordinates), heading, and the like of the vehicle using a commonly known method.

### Constitution: Display

The display 30 is an output unit that outputs and displays various types of information based on a control of the driving support device 50. Note that the specific constitution of the display 30 may take on any form, and a flat panel display such as a commonly known liquid crystal display or organic EL display may be used.

### Constitution: Speaker

The speaker 40 is an output unit that outputs various types of audio based on a control of the driving support device 50. The specific voice output from the speaker 40 may take on any form, and it is possible to output a synthetic voice that is generated as necessary or a pre-recorded voice.

### Constitution: Driving Support Device

The driving support device 50 includes a control unit 51, and a data storage unit 52.

### Constitution: Driving Support Device - Control Unit

The control unit 51 controls the driving support device 50. Specifically, the control unit 51 is a computer configured to include a CPU, various programs that are interpreted and executed in the CPU (including an OS and other basic control programs, and application programs that are activated in the OS to carry out specific functions), and an internal memory such as a RAM for storing the programs and various data. In particular, the driving support program according to the first embodiment is installed in the driving support device 50 through any storage medium or network, and configures various portions of the control unit 51 in substance.

The control unit 51 includes a regenerative electric power specification unit 51a, a guidance unit 51b, and a setting unit 51c in terms of functional concept. The regenerative electric power specification unit 51a specifies the electric power regenerated by the regenerative brake. The guidance unit 51b performs guidance through the display 30 and the speaker 40 that encourages deceleration of the vehicle. The setting unit 51c sets the timing at which the guidance unit 51b performs guidance. In other words, the setting unit 51c sets a timing at which the guidance unit 51b performs subsequent guidance, and after the vehicle passes a target feature the guidance unit 51b performs guidance anew at the timing set by the setting unit 51 c, which is a timing based on the distance from the vehicle to a subsequent target feature. It should be noted that "setting" includes changing the timing at which the guidance unit 51b performs guidance depending on various conditions. The processes executed by the various portions of the control unit 51 will be described in detail later.

### Constitution: Driving Support Device - Data Storage Unit

The data storage unit 52 is a storage unit that stores programs and various data required for operation of the driving support device 50, and has a configuration that uses a hard disk (not shown) as an external memory device, for example. However, any other storage mediums, including a magnetic storage medium such as a magnetic disk or an optical storage medium such as a DVD or Blu-ray disc, can be used in place of or in combination with the hard disk.

The data storage unit 52 has a map information database 52a and a timing database 52b. (Note that database will be abbreviated to "DB" below.)

The map information DB 52a is a map information storage unit that stores map information. The "map information" is configured to include link data (e.g. link numbers, connection node numbers, road coordinates, road types, number of lanes, travel restrictions), node data (node numbers and coordinates), feature data (e.g. traffic signals, road signs, guard rails, buildings), target feature data (e.g. intersections, stop lines, railroad crossings, curves, ETC toll booths, expressway exits), facility data (e.g. facility locations and facility types), topography data, and map display data for displaying a map on the display 30.

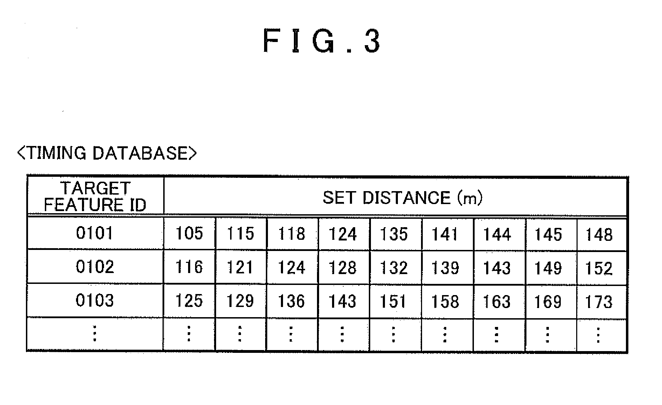

The timing DB 52b is a timing information storage unit that stores timing information for specifying a plurality of timings set by the setting unit 51c. FIG 3 is a table that illustrates information stored in the timing DB 52b. As shown in FIG 3, information that corresponds to the table items "Target Feature ID" and "Set Distance" is mutually associated and stored in the timing DB 52b. Information stored as corresponding to the table item "Target Feature ID" is identification information that uniquely identifies a target feature for which the setting unit 51c sets a guidance timing ("0101" and so forth in FIG 3). Information that is stored corresponding to the table item "Set Distance" is timing information for specifying a plurality of timings set by the setting unit 51c. In FIG 3, the timing information is stored as a numerical value that indicates a distance set by the setting unit 51c (a "set distance" below), which is a distance between the vehicle and the target feature at the timing when guidance is performed (a "guidance distance" below). Note that in FIG 3, nine set distances are stored in ascending order per target feature ID.

### Processing: Driving Support Process

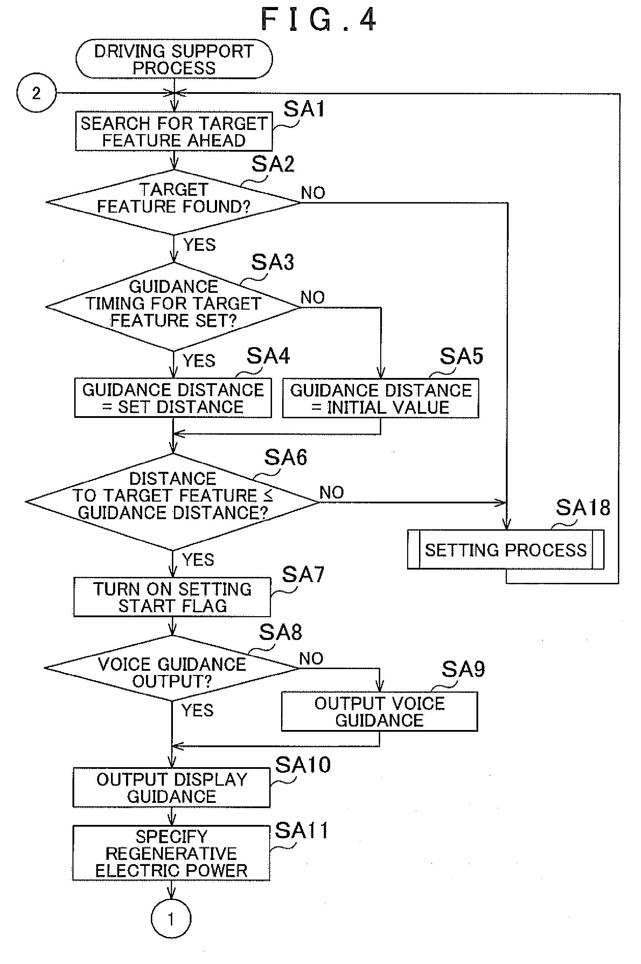

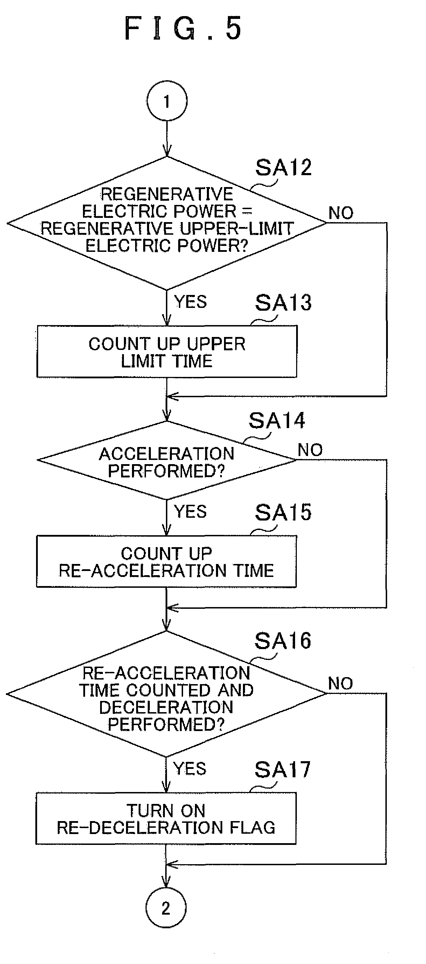

Next, a driving support process executed by the driving support system 1 thus configured will be described. FIGS. 4 and 5 are flowcharts of the driving support process (steps in the description of each process below are abbreviated to "S"). The driving support process is executed, for example, after the driving support system 1 is powered on and the vehicle starts traveling. Note that, with regard to whether the vehicle has started traveling, it is determined that the vehicle has started traveling when the shift position changes from a parking position to a drive position, based on input from the ECU 10, for example.

After the driving support process is started, the guidance unit 51b identifies the current position of the vehicle through the current position detection processing unit 20, and based on the target feature data in the map information DB 52a searches for target features present ahead of the vehicle on a map (SA1).

Next, the guidance unit 51b determines whether there is a target feature ahead of the vehicle as a result of searching for target features at SA1 (SA2). For example, the guidance unit 51b determines whether there is a target feature within a predetermined distance in the advancing direction of the road on which the vehicle is currently traveling.

If there is a target feature ahead of the vehicle (SA2: Yes), that is, if the vehicle has not yet passed the target feature, the guidance unit 51b determines whether the setting unit 51c has set a timing at which to perform guidance that encourages a brake operation for stopping or decelerating the vehicle before reaching the target feature (SA3). If the target feature ID of a particular target feature ahead of the vehicle is stored in the timing DB 52b, and if a predetermined quantity of timing information (nine in the example of FIG 3) is stored associated with that particular target feature ID in the timing DB 52b, the guidance unit 51b determines that the setting unit 51c has set a timing at which to perform guidance that encourages a brake operation for stopping or decelerating the vehicle before reaching the target feature.

If the setting unit 51c has set a timing at which to perform guidance (SA3: Yes), based on the timing information stored in the timing DB 52b the guidance unit 51b sets a set distance as a guidance distance (SA4). In this case, the guidance unit 51b sets the guidance distance such that guidance is performed at a median value among the plurality of timings that corresponds to the timing information stored in the timing DB 52b. In other words, for example, if the target feature ID of a certain target feature ahead of the vehicle is "0101" according to the timing DB 52b in FIG 3, 135 meters is the median value among the corresponding nine set distances, and thus set as the guidance distance.

Returning to FIG 4, if the determination result at SA3 is that the timing at which to perform guidance has not been set by the setting unit 51c (SA3 : No), the guidance unit 51b sets a predetermined initial value as the guidance distance (SA5). A distance of 150 meters is used as the initial value, which assumes a standard living area and is calculated as the approximate distance the vehicle travels from a vehicle speed of 60 km/h to a stop at a deceleration of 0.1 G on a downhill road with a 5% grade.

Following the processing at SA4 or SA5, the guidance unit 51b determines whether the distance from the current position of the vehicle to the target feature is equal to or less than the guidance distance set at SA4 or SA5 (SA6). Note that the guidance unit 51b specifies the distance from the current position of the vehicle to the target feature based on the current position of the vehicle as identified through the current position detection processing unit 20, and the position of the target feature as acquired from the map information DB 52a.

If the distance from the current position of the vehicle to the target feature is equal to or less than the guidance distance set at SA4 or SA5 (SA6: Yes), the guidance unit 51b turns on a setting start flag (SA7). The setting start flag is a flag for specifying whether a condition for the setting unit 51c to start making a setting is satisfied, and stored in a RAM (not shown).

Next, the guidance unit 51b determines whether voice guidance has been output through the speaker 40 (SA8). If the voice guidance has not been output (SA8: No), the guidance unit 51b outputs through the speaker 40 voice guidance that encourages deceleration of the vehicle (SA9). For example, the guidance unit 51b outputs through the speaker 40 voice guidance such as "Slowly depress the brake pedal at a constant pressure and stop at the target feature."

If voice guidance has been output through the speaker 40 (SA8: Yes) or following the processing at SA9, the guidance unit 51b outputs through the display 30 display guidance that encourages deceleration of the vehicle (SA10). For example, the guidance unit 51b displays through the display 30 a message such as "Slowly depress the brake pedal to a set position and stop at the target feature." The driver receiving the voice guidance output from the speaker 40 at SA9 and the display guidance output from the display 30 at SA10 thus performs a brake operation, and electric power is regenerated by the regenerative brake in response to the brake operation.

Next, the regenerative electric power specification unit 51a specifies the electric power regenerated by the regenerative brake in response to the brake operation (SA11). For example, the regenerative electric power specification unit 51a specifies the regenerative electric power by multiplying the voltage and current of the battery as input from the ECU 10.

Proceeding to FIG 5, the setting unit 51c determines whether the regenerative electric power specified by the regenerative electric power specification unit 51a has reached a regenerative upper-limit electric power (SA12). The regenerative upper-limit electric power is an upper limit value of electric power that can be regenerated by the regenerative brake, and the setting unit 51c performs the determination at SA12 using the chargeable electric power input from the ECU 10 as the regenerative upper-limit electric power, for example. Note that the chargeable electric power is a value that may vary depending on the battery temperature.

If the regenerative electric power specified by the regenerative electric power specification unit 51a has reached the regenerative upper-limit electric power (SA12: Yes), the braking power required in accordance with the brake operation of the driver exceeds the regenerative upper-limit electric power, and braking by a friction brake is used in addition to the regenerative brake. Thus, the setting unit 51c counts up an upper limit time that indicates the time at which the regenerative electric power reached the regenerative upper-limit electric power (SA13). The upper limit time is stored in the RAM, and the setting unit 51c adds to the upper limit time stored in the RAM an elapsed time since the previous determination at SA12 until the current determination at SA12.

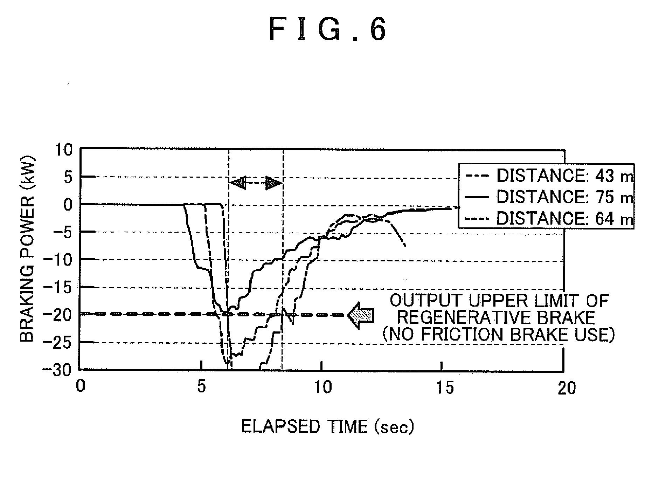

FIG 6 is a graph that illustrates a relationship between braking power and an elapsed time after the guidance unit 51b starts guidance output. In order to facilitate understanding of the relationship between the braking power and the regenerative upper-limit electric power in FIG 6, the braking power is shown in units of kilowatts. In FIG 6, when the guidance distance is 43 meters and 64 meters and the regenerative upper-limit electric power is 20 kilowatts, the braking power exceeds the regenerative upper-limit electric power. In such case, braking by the friction brake is used in addition to the regenerative brake. Therefore, the amount of electric power regenerated by the regenerative brake is less than the amount regenerated when the regenerative brake alone is used to decelerate the vehicle. Accordingly, the time at which the braking power exceeds the regenerative upper-limit electric power (e.g. a time indicated by a double-headed arrow in FIG 6 when the guidance distance is 43 meters) is counted up by the setting unit 51c as the upper limit time. Meanwhile, when the guidance distance is 75 meters, the braking power does not exceed the regenerative upper-limit electric power, and the regenerative electric power does not reach the regenerative upper-limit electric power. Therefore, the upper limit time is not counted up by the setting unit 51c.

Returning to FIG 5, at SA12, if the regenerative electric power specified by the regenerative electric power specification unit 51a has not reached the regenerative upper-limit electric power (SA12: No) or following the processing at SA13, the setting unit 51c determines whether acceleration of the vehicle is being performed (SA14). Specifically, the setting unit 51c determines whether acceleration of the vehicle is being performed based on the accelerator operation amount as input from the ECU 10. Alternatively, the setting unit 51c may determine whether acceleration of the vehicle is being performed based on the vehicle speed as input from the ECU 10.

If acceleration of the vehicle is being performed (SA14: Yes), the acceleration operation is performed despite the fact that the guidance unit 51b output guidance encouraging deceleration of the vehicle. The setting unit 51c thus counts up a re-acceleration time that indicates a time that acceleration of the vehicle is performed after the guidance unit 51b performs guidance and before the vehicle passes the target feature (SA15). The re-acceleration time is stored in the RAM, and the setting unit 51c adds to the re-acceleration time stored in the RAM an elapsed time since the previous determination at SA14 until the current determination at SA14.

At SA14, if acceleration of the vehicle is not being performed (SA14: No) or following the processing at SA15, the setting unit 51c determines whether the re-acceleration time stored in the RAM is counted up to a value greater than zero and whether deceleration of the vehicle is being performed (SA16). Specifically, the setting unit 51c determines whether deceleration of the vehicle is being performed based on the brake depression force as input from the ECU 10. Alternatively, the setting unit 51c may determine whether deceleration of the vehicle is being performed based on the vehicle speed as input from the ECU 10.

If the re-acceleration time stored in the RAM is counted up to a value greater than zero and deceleration of the vehicle is being performed (SA16: Yes), a brake operation was performed after acceleration of the vehicle, and the setting unit 51c c turns on a re-deceleration flag (SA17). The re-deceleration flag is a flag for specifying whether a brake operation is performed after the guidance unit 51b performs guidance and before the vehicle passes the target feature, and stored in the RAM (not shown).

At SA16, if the re-acceleration time stored in the RAM is zero or if deceleration of the vehicle is not being performed (SA16: No), or following the processing at SA17, the control unit 51 returns to SA1.

If there is no target feature ahead of the vehicle at SA2 in FIG 4 (SA2: No) or the distance from the current position of the vehicle to the target feature at SA6 is greater than the guidance distance set at SA4 or SA5 (SA6: No), the setting unit 51c c executes a setting process (SA18). After the setting process ends, the control unit 51 returns to SA1.

### Processing: Setting Process

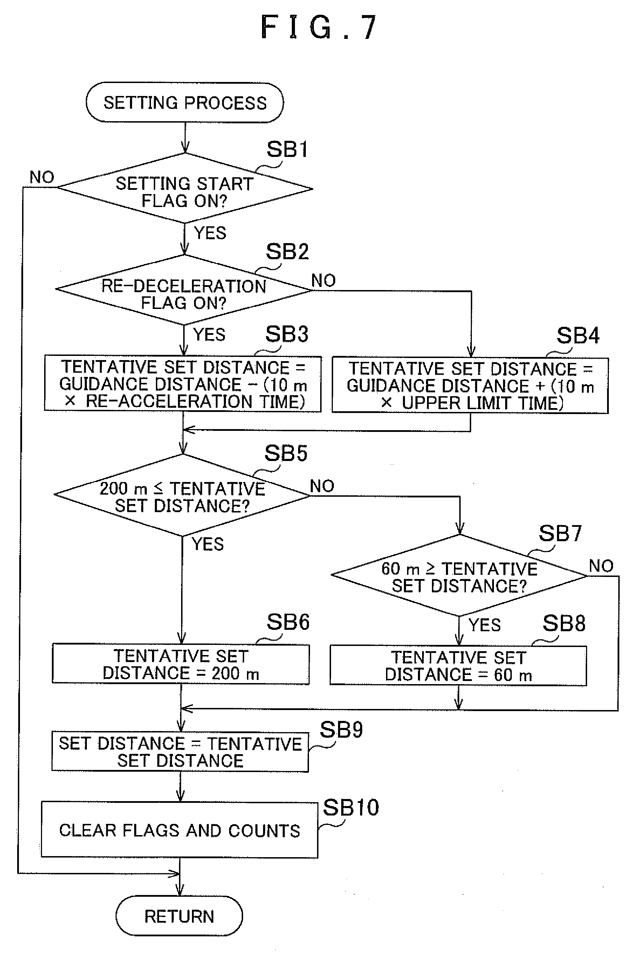

Here, the setting process will be described. FIG 7 is a flowchart of the setting process.

After the setting process is started, the setting unit 51c determines whether the setting start flag stored in the RAM is on (SB 1). If the setting start flag is not on (if the setting start flag is off) (SB1: No), a condition for starting to make a setting is not satisfied. Thus, the setting unit 51c ends the setting process and the processing returns to the main routine.

However, if the setting start flag is on (SB1: Yes), the setting unit 51c c determines whether the re-deceleration flag stored in the RAM is on (SB2).

If the re-deceleration flag is on (SB2: Yes), the setting unit 51c calculates a tentative set distance based on the guidance distance set at SA4 or SA5 in FIG 4 and the re-acceleration time stored in the RAM (SB3). The tentative set distance is a tentative value for determining a set distance in the setting process. As shown in FIG 7, for example, the setting unit 51c calculates as the tentative set distance a value that is found by subtracting the product of the re-acceleration time stored in the RAM and a tentative vehicle speed of 10 m/s from the guidance distance set at SA4 or SA5 in FIG 4. The tentative set distance thus calculated is proportional to the re-acceleration time and a shorter distance than the guidance distance. Therefore, by using this tentative set distance as the guidance distance, the timing at which the guidance unit 51b performs guidance to encourage deceleration of the vehicle can be later than the previous guidance timing.

However, if the re-deceleration flag is not on (if the re-deceleration flag is off) (SB2: No), the setting unit 51c calculates the tentative set distance based on the guidance distance set at SA4 or SA5 in FIG 4 and the upper limit time stored in the RAM (SB4). As shown in FIG 7, for example, the setting unit 51c calculates as the tentative set distance a value that is found by adding the product of the upper limit time stored in the RAM and a tentative vehicle speed of 10 m/s to the guidance distance set at SA4 or SA5 in FIG 4. The tentative set distance thus calculated is proportional to the upper limit time and a longer distance than the guidance distance. Therefore, by using this tentative set distance as the guidance distance, the timing at which the guidance unit 51b performs guidance to encourage deceleration of the vehicle can be earlier than the previous guidance timing.

Following the processing at SB3 or SB4, the setting unit 51c determines whether the tentative set distance calculated at SB3 or SB4 is equal to or greater than 200 meters (SB5).

If the tentative set distance calculated at SB3 or SB4 is equal to or greater than 200 meters (SB5: Yes), the setting unit 51c sets as the tentative set distance an approximate distance of 200 meters that the vehicle travels from a vehicle speed of 70 km/h to a stop at a deceleration of 0.1 G on a downhill road with a 5% grade (SB6).

However, if the tentative set distance calculated at SB3 or SB4 is not equal to or greater than 200 meters (is less than 200 meters) (SB5: No), the setting unit 51c determines whether the tentative set distance calculated at SB3 or SB4 is equal to or less than 60 meters (SB7).

If the tentative set distance calculated at SB3 or SB4 is equal to or less than 60 meters (SB7: Yes), the setting unit 51c sets as the tentative set distance an approximate distance of 60 meters that the vehicle travels from a vehicle speed of 40 km/h to a stop at a deceleration of 0.1 G on a downhill road with a 5% grade (SB8).

Following the processing at SB6 or SB8, or if the tentative set distance calculated at SB3 or SB4 is not equal to or less than 60 meters at SB7 (SB7: No), the setting unit 51c sets the newest tentative set distance as the set distance (SB9). The setting unit 51c also associates this set distance with the target feature ID of the target feature the vehicle last passed, and stores such associated information in the timing DB 52b as timing information. If the set distance set at SB9 is larger than the smallest value and smaller than the largest value among the plurality of set distances stored corresponding to the table item "Set Distance" in the timing DB 52b, and also smaller than the median value among the plurality of set distances, the setting unit 51c adds the set distance set at SB9 to the timing DB 52b and deletes the largest value among the plurality of set distances stored in the timing DB 52b. However, if the set distance set at SB9 is larger than the smallest value and smaller than the largest value among the plurality of set distances stored corresponding to the table item "Set Distance" in the timing DB 52b, and also larger than the median value among the plurality of set distances, the setting unit 51c adds the set distance set at SB9 to the timing DB 52b and deletes the smallest value among the plurality of set distances stored in the timing DB 52b. If the set distance set at SB9 is equal to or smaller than the smallest value and equal to or larger than the largest value among the plurality of set distances stored corresponding to the table item "Set Distance" in the timing DB 52b, the set distance set at SB9 is an irregular value and the setting unit 51c does not add this set distance to the timing DB 52b. Note that if the number of set distances stored in the timing DB 52b associated with the target feature ID of the target feature last passed by the vehicle is less than a predetermined number (nine in the example of FIG 3), the set distance set at SB9 is added to the timing DB 52b without deleting a set distance stored in the timing DB 52b.

Here, as an example, the target feature ID of the target feature last passed by the vehicle is "0101". At SA4 in FIG 4, the guidance distance is set as the median value of 135 meters among the nine set distances corresponds to the target feature ID "0101" in the timing DB 52b of FIG 3, and guidance is output by the guidance unit 51b at SA9 and SA10. In this example, if 122 meters is calculated as the tentative set distance at SB3 in FIG 7 and 122 meters is set as the set distance at SB9, the set distance of 122 meters is larger than the smallest value of 105 meters and smaller than the largest value of 148 meters among the plurality of set distances stored associated with the target feature ID "0101" in the timing DB 52b of FIG 3. In addition, the set distance of 122 meters is smaller than the median value of 135 meters among the plurality of set distances. Therefore, the setting unit 51c adds the set distance of 122 meters to the set distances stored associated with the target feature ID "0101" in the timing DB 52b of FIG 3, and deletes the largest value of 148 meters among the set distances stored associated with the target feature ID "0101" in the timing DB 52b. Accordingly, the median value among the nine set distances corresponding to the target feature ID "0101" is changed from 135 meters to 124 meters. In other words, the set distance that the guidance unit 51b sets as the guidance distance at SA4 in FIG 4 becomes shorter, and therefore, the timing at which the guidance unit 51b performs guidance anew to encourage deceleration of the vehicle can be made later than the previous guidance timing.

Alternatively, if 138 meters is calculated as the tentative set distance at SB4 in FIG 7 and 138 meters is set as the set distance at SB9, the set distance of 138 meters is larger than the smallest value of 105 meters and smaller than the largest value of 148 meters among the plurality of set distances stored associated with the target feature ID "0101" in the timing DB 52b of FIG 3. In addition, the set distance of 138 meters is larger than the median value of 135 meters among the plurality of set distances. Therefore, the setting unit 51c adds the set distance of 138 meters to the set distances stored associated with the target feature ID "0101" in the timing DB 52b of FIG 3, and deletes the smallest value of 105 meters among the set distances stored associated with the target feature ID "0101" in the timing DB 52b. Accordingly, the median value among the nine set distances corresponding to the target feature ID "0101" is changed from 135 meters to 138 meters. In other words, the set distance that the guidance unit 51b sets as the guidance distance at SA4 in FIG 4 becomes longer, and therefore, the timing at which the guidance unit 51b performs guidance anew to encourage deceleration of the vehicle can be made earlier than the previous guidance timing.

In addition, if the target feature ID of the target feature last passed by the vehicle is "0101" and the set distance set at SB9 is 98 meters, the set distance of 98 meters is smaller than the smallest value of 105 meters among the plurality of set distances stored associated with the target feature ID "0101" in the timing DB 52b of FIG 3. Therefore, the setting unit 51c does not add the set distance of 98 meters to the timing DB 52b.

Returning to FIG 7, following the processing at SB9, the setting unit 51c clears the setting start flag, the re-deceleration flag, the upper limit time, and the re-acceleration time stored in the RAM (SB 10), and ends the setting process. The processing then returns to the main routine.

### Effects

According to the first embodiment described above, based on the electric power regenerated by the regenerative brake in response to a brake operation performed after the guidance unit 51b performs guidance and before a target feature is passed, a timing at which to perform guidance is set, and guidance is performed anew at the set timing. Therefore, guidance can be performed such that electric power regeneration is efficiently performed by the regenerative brake in consideration of the driving style of the driver.

The timing at which to perform guidance is based on a brake operation performed after the guidance unit 51b performs guidance and before a target feature is passed. Therefore, guidance can be performed such that a suitable brake operation is performed in consideration of the driving style of the driver.

The setting unit 51c sets the timing at which the guidance unit 51b performs guidance earlier if the electric power regenerated by the regenerative brake in response to the brake operation has reached the regenerative upper-limit electric power. Therefore, guidance can be performed at a timing that allows the driver to perform a gentle brake operation without the regenerative electric power reaching the regenerative upper-limit electric power. Thus, guidance can be performed such that the regenerative brake efficiently regenerates electric power.

If a brake operation is performed following an acceleration operation after the guidance unit 51b performs guidance and before the vehicle passes the target feature, the setting unit 51c sets the timing at which the guidance unit 51b performs guidance later. Therefore, guidance can be performed at a timing at which the vehicle approaches the target feature without requiring that the driver accelerate the vehicle after guidance is performed by the guidance unit 51b. Thus, unnecessary acceleration operations and brake operations can be suppressed.

The guidance unit 51b performs guidance at a median value among the plurality of timings that corresponds to the timing information stored in the timing DB 52b. Therefore, guidance can be performed at the optimal timing in consideration of the driving style of the driver.

### Second Embodiment

A second embodiment of the present invention will be explained here. In the second embodiment, a setting unit sets timings at which to perform guidance for each of a plurality of target feature types, and guidance is performed at a timing that corresponds to a target feature type among the timings set by the setting unit. The configuration of the second embodiment is generally identical to the configuration of the first embodiment unless otherwise noted. For configurations generally identical to the configuration of the first embodiment, the same reference symbols and/or names as used in the first embodiment are assigned as necessary and accompanying explanations are omitted.

### Constitution

First, the constitution of the driving support system device 1 according to the second embodiment will be described. Note that, excluding the constitution of the control unit 51 of the driving support device 50 and the content of the timing DB 52b, the constitution of the driving support system 1 according to the second embodiment is identical to that of the driving system 1 in the first embodiment. Therefore, the constitution of the driving support system 1 according to the second embodiment is not shown in a drawing.

### Constitution: Driving Support Device - Control Unit

The control unit 51 of the driving support device 50 according to the second embodiment includes a type specification unit in a constitution that is identical to that of the control unit 51 in the first embodiment. The type specification unit specifies a target feature type. The processes executed by the various portions of the control unit 51 that includes the type specification unit will be described in detail later.

### Constitution: Driving Support Device - Data Storage Unit

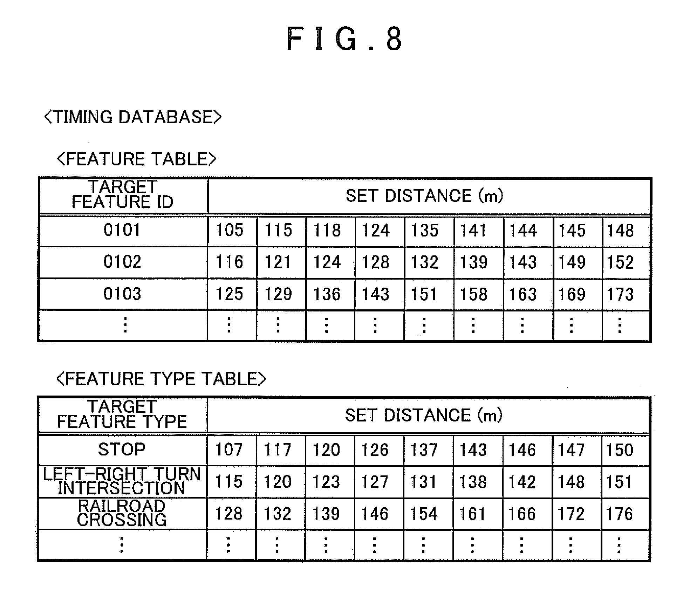

As described with reference to FIG 3 in the first embodiment, the timing DB 52b according to the second embodiment stores timing information that specifies a plurality of timings per target feature ID, and also stores timing information that specifies a plurality of timings per target feature type. FIG 8 is a table that illustrates information stored in the timing DB 52b according to the second embodiment. As shown in FIG 8, similar to the table shown in FIG 3, the timing DB 52b according to the second embodiment stores a feature table, which stores timing information that specifies a plurality of timings per target feature ID, and also stores a feature type table, which stores timing information that specifies a plurality of timings per target feature type. Information that corresponds to the table items "Target Feature Type" and "Set Distance" is mutually associated and stored in the feature type table. Information stored as corresponding to the table item "Target Feature Type" is type information that specifies a target feature type for which the setting unit 51c sets a guidance timing ("Stop" and so forth in FIG 8).

### Processing: Driving Support Process

Next, a driving support process executed by the driving support system 1 of the second embodiment will be described. Note that, excluding the processing content at SA3 and SA4 in FIG 4, the driving support process according to the second embodiment is identical to the driving support process in the first embodiment. Therefore, a flowchart of the driving support process according to the second embodiment is not provided.

At SA2 in FIG 4, if there is a target feature ahead of the vehicle (SA2: Yes), the guidance unit 51b determines whether the setting unit 51c has set a timing at which to perform guidance that encourages a brake operation for stopping or decelerating the vehicle before reaching the target feature (SA3). At such time, the type specification unit specifies the type of a particular target feature ahead of the vehicle based on the feature data stored in the map information DB 52a.

Here, similar to the first embodiment, if the target feature ID of a particular target feature ahead of the vehicle is stored in the feature table of the timing DB 52b, the guidance unit 51b determines that the setting unit 51c has set a timing at which to perform guidance that encourages a brake operation for stopping or decelerating the vehicle before reaching the target feature. In addition, even though the target feature ID of a particular target feature ahead of the vehicle may not be stored in the feature table of the timing DB 52b, if the type information that corresponds to that particular type of target feature is stored in the feature type table, the guidance unit 51b determines that the setting unit 51c has set a timing at which to perform guidance that encourages a brake operation for stopping or decelerating the vehicle before reaching the target feature.

If the determination result at SA3 is that the setting unit 51c has set a timing at which to perform guidance (SA3: Yes), based on the timing information stored in the timing DB 52b the guidance unit 51b sets a set distance as a guidance distance (SA4). If the target feature ID of a particular target feature ahead of the vehicle is stored in the feature table of the timing DB 52b, and if a predetermined quantity of timing information (nine in the example of FIG 8) is stored associated with that particular target feature ID, the guidance unit 51b sets a guidance distance such that guidance is performed at a median value among the plurality of timings that corresponds to the timing information stored in the feature table associated with the target feature ID, similar to the first embodiment. In other words, for example, if the target feature ID of a certain target feature ahead of the vehicle is "0101" according to the feature table of the timing DB 52b in FIG 8, 135 meters is the median value among the corresponding nine set distances, and thus set as the guidance distance.

In addition, even though the target feature ID of a particular target feature ahead of the vehicle may not be stored in the feature table of the timing DB 52b, if the type information that corresponds to that particular type of target feature is stored in the feature type table, and if a predetermined quantity of timing information (nine in the example of FIG 8) is stored associated with that particular type information, the guidance unit 51b sets a guidance distance such that guidance is performed at a median value among the plurality of timings that corresponds to the timing information stored in the feature type table associated with the target feature type. In other words, for example, if the type of a certain target feature ahead of the vehicle is "Stop" according to the feature type table of the timing DB 52b in FIG 8, 137 meters is the median value among the corresponding nine set distances, and thus set as the guidance distance.

### Processing: Setting Process

Next, the setting process of the second embodiment will be described. Note that, excluding the processing content at SB9 in FIG 7, the setting process according to the second embodiment is identical to the setting process in the first embodiment. Therefore, a flowchart of the setting process according to the second embodiment is not provided.

At SB9 in FIG 7, the setting unit 51c sets the newest tentative set distance as the set distance (SB9). The setting unit 51c then associates the set distance with the target feature ID of the target feature last passed by the vehicle, and stores the set distance as timing information in the feature table of the timing DB 52b. The setting unit 51c also associates the set distance with the type of the target feature last passed by the vehicle, and stores the set distance as timing information in the feature type table of the timing DB 52b.

### Effects

According to the second embodiment described above, the setting unit 51c sets a timing at which to perform guidance per the target feature type specified by the type specification unit. The guidance unit 51b performs guidance at a timing that corresponds to the target feature type specified by the type specification unit among the timings set by the setting unit 51c. Therefore, guidance can be performed such that electric power regeneration is efficiently performed by the regenerative brake at a suitable timing in accordance with the target feature type and in consideration of the driving style of the driver.

### Modifications of Embodiments

Embodiments of the present invention were explained above. However, the specific configuration and units for implementing the present invention may be modified and improved in any manner or form within the scope of the technical ideas of the present invention as set forth in the claims thereof. Examples of such modifications are explained below.

### Problems to be Solved by the Invention and Effects of the Invention

The problems to be solved by the present invention and the effects of the present invention are not limited to the content described above and may vary depending on the environment in which the present invention is practiced and the detailed configuration thereof. The above problems may be only partially solved, and the above effects only partially achieved.

### Timing Database

In the second embodiment described above, as an example, the feature type table of the timing DB 52b stores timing information per type, with target feature types including stops, left-right turn intersections, and railroad crossings. However, as another example, the speed limit range of the road on which the vehicle is traveling, number of lanes, road curvature, and road grade may be set as target feature types, and timing information may be stored associated with these types. Further, timing information may be stored per combinations of a plurality of types of target features.

### Driving Support Process

In the embodiments described above, at SA3 of the driving support process shown in FIG 4, if it is determined that the timing at which to perform guidance has not been set by the setting unit 51c (SA3: No), the guidance unit 51b sets the predetermined initial value as the guidance distance (SA5). However, as explained in the second embodiment, if a target feature type is specified by the type specification unit, the initial value may be changed depending on the specified type.

Further, in the embodiments described above, at SA14 of the driving support process shown in FIG 5, if it is determined that vehicle acceleration is being performed (SA14: Yes), the setting unit 51c counts up the re-acceleration time (SA15). However, if an on-vehicle radar or the like discovers an obstacle in the vehicle surroundings (e.g. a stopped vehicle ahead or traffic work zone), the obstacle may be an external disturbance behind the vehicle acceleration. Thus, counting up of the re-acceleration time may not be performed in such case. At SA16, if the re-acceleration time stored in the RAM is counted up to a value greater than zero and it is determined that vehicle deceleration is being performed (SA16: Yes), the setting unit 51c turns on the re-deceleration flag (SA17). However, if the on-vehicle radar or the like discovers an obstacle in the vehicle surroundings, the obstacle may be an external disturbance behind the vehicle brake operation. Thus, the re-deceleration flag may not be turned on in such case.

### Setting Process

In the embodiments described above, at SB2 of the setting process shown in FIG 7, if it is determined that the re-deceleration flag is not turned on (SB2: No), the setting unit 51c calculates the tentative set distance based on the guidance distance set at SA4 or SA5 in FIG 4 and the upper limit time stored in the RAM (SB4). However, if it is determined that the re-deceleration flag is not turned on (SB2: No), a determination may be made as to whether the upper limit time stored in the RAM is counted up to a value greater than zero. If the upper limit time is counted up to a value greater than zero, the tentative set distance may be calculated based on the guidance distance set at SA4 or SA5 and the upper limit time. In such case, the execution sequence of the process at SB2 to determine whether the re-deceleration flag is turned on and the process to determine whether the upper limit time is counted up to a value greater than zero may be reversed.

In the embodiments described above, the set distance set at SB9 of the setting process shown in FIG 7 is stored in the timing DB 52b as timing information. However, if the timing information that corresponds to the target feature ID of the target feature passed by the vehicle is not stored in the timing DB 52b (that is, if this is the first time the vehicle has passed the target feature), a predetermined quantity of the set distance set at SB9 (nine in the example of FIG 3) may be stored in the timing DB 52b.

In the embodiments described above, as an example, a timing at which to perform guidance is set based on a brake operation performed after the guidance unit 51b performs guidance and before a target feature is passed, and electric power regenerated by the regenerative brake in response to the brake operation. However, the timing at which to perform guidance may be set based on only the electric power regenerated by the regenerative brake.

In the embodiments described above, as an example, the guidance unit 51b performs the guidance at a median value among the plurality of the timings that corresponds to the timing information stored in the timing DB 52. However, the guidance unit 51b may also perform the guidance at an average value of the plurality of timings that corresponds to the timing information stored in the timing DB 52.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support device (50), comprising:
a regenerative electric power specification unit (51a) that is adapted to specify electric power regenerated by a regenerative brake;
a guidance unit (51b) that is adapted to, at a timing based on a distance from a vehicle to a target feature, perform guidance to encourage deceleration of the vehicle; and
a setting unit (51c) that is adapted to set a timing at which the guidance unit performs the guidance based on the electric power regenerated by the regenerative brake in response to a brake operation performed after the guidance unit performs the guidance and before the vehicle passes the target feature as specified by the regenerative electric power specification unit, wherein
the guidance unit is adapted to perform the guidance anew at the timing set by the setting unit.

2. The driving support device according to claim 1, wherein
the setting unit (51c) is adapted to set the timing at which the guidance unit (51b) performs the guidance based on the brake operation performed after the guidance unit performs the guidance and before the vehicle passes the target feature.

3. The driving support device according to claim 1 or 2, further comprising:
a type specification unit that is adapted to specify a target feature type representing a type of the target feature, wherein
the setting unit (51c) is adapted to set the timing at which the guidance unit (51b) performs the guidance for each of a plurality of target feature types specified by the type specification unit, and
the guidance unit (51b) is adapted to perform the guidance at the timing that corresponds to the target feature type specified by the type specification unit among a plurality of the timings set by the setting unit.

4. The driving support device according to any one of claims 1 to 3, wherein the setting unit (51c) is adapted to set the timing at which the guidance unit performs the guidance earlier if the electric power regenerated by the regenerative brake in response to the brake operation reaches a regenerative upper-limit electric power.

5. The driving support device according to any one of claims 1 to 4, wherein the setting unit (51c) is adapted to set the timing at which the guidance unit performs the guidance later if the brake operation is performed following an acceleration operation after the guidance unit performs the guidance and before the vehicle passes the target feature.

6. The driving support device according to any one of claims 1 to 5, further comprising:
a timing information storage unit (52b) that is adapted to store timing information that specifies a plurality of timings set by the setting unit (51c), wherein
the guidance unit (51b) is adapted to perform the guidance at a median value among the plurality of timings that corresponds to the timing information.

7. A driving support method, comprising the steps of:
specifying electric power regenerated by a regenerative brake;
performing, at a timing based on a distance from a vehicle to a target feature, guidance to encourage deceleration of the vehicle; and
setting a timing at which the guidance is performed at the guidance step based on the electric power regenerated by the regenerative brake in response to a brake operation performed after the guidance is performed at the guidance step and before the vehicle passes the target feature as specified at the regenerative electric power specification step, wherein
the guidance is performed anew at the guidance step at the timing set at the setting step.

8. A driving support program comprising computer-executable instructions which, when executed by a computer, cause the computer to perform the driving support method according to claim 7.
